(19)

Europäisches
Patentamt
European
Patent Office
Office européen
des brevets

(11) **EP 4 207 382 A1**

(12) **EUROPEAN PATENT APPLICATION**
published in accordance with Art. 153(4) EPC

(43) Date of publication:
**05.07.2023  Bulletin 2023/27**

(21) Application number: **21861760.3**

(22) Date of filing: **30.08.2021**

(51) International Patent Classification (IPC):
**H01M 4/505** (2010.01)   **C01G 45/00** (2006.01)
**H01M 4/36** (2006.01)

(52) Cooperative Patent Classification (CPC):
**C01G 45/00; H01M 4/36; H01M 4/505**

(86) International application number:
**PCT/JP2021/031809**

(87) International publication number:
**WO 2022/045339 (03.03.2022 Gazette 2022/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **31.08.2020   JP 2020145820**

(71) Applicant: **APB Corporation
Echizen City, Fukui 915-0043 (JP)**

(72) Inventors:
• **ISOMURA, Shogo
  Kyoto-shi Kyoto 605-0095 (JP)**
• **HORIE, Hideaki
  Tokyo 101-0041 (JP)**

(74) Representative: **Grünecker Patent- und
Rechtsanwälte
PartG mbB
Leopoldstraße 4
80802 München (DE)**

(54) **COATED POSITIVE ELECTRODE ACTIVE MATERIAL PARTICLES FOR LITHIUM-ION BATTERY**

(57)    The present invention provides coated positive electrode active material particles for a lithium ion battery, with which electrical conductivity of a coating layer can be improved by optimizing the three-dimensional structure of a conductive assistant in the coating layer to exhibit electrical conductivity. The particles include a positive electrode active material particle and a coating layer that contains a polymer compound and a conductive assistant and that covers at least part of a surface of the positive electrode active material particle, and have a paraffin oil absorption value of 25 to 40 mL/100 g as measured in accordance with JIS K 5101-13-1 (2004).

EP 4 207 382 A1

**Description**

Technical Field

The present invention relates to coated positive electrode active material particles for a lithium ion battery.

Background Art

In recent years, lithium ion (secondary) batteries have become increasingly ubiquitous as high-capacity, small-size, and light-weight secondary batteries.

In general, an electrode of a lithium ion battery is formed by applying an electrode active material or the like to an electrode current collector by using a binder. For a bipolar battery, a positive electrode layer is formed by applying a positive electrode active material or the like to one surface of a current collector by using a binder, and a negative electrode layer is formed by applying a negative electrode active material or the like to the other surface of the current collector by using a binder to form a bipolar electrode.

An example of a known electrode active material for producing such a lithium ion battery is coated active material particles obtained by coating at least part of surfaces of active material particles with a coating agent containing a coating resin and a conductive assistant (for example, PTL 1).

Citation List

Patent Literature

PTL 1: Japanese Unexamined Patent Application Publication No. 2016-189325

Summary of Invention

Technical Problem

The coated active material particles that use a coating agent described in PTL 1 exhibit electrical conductivity by assuming a three-dimensional structure that enables electron exchange in the conductive assistant. This leads to a problem in that, when strong shear force acts on the coating agent, the three-dimensional structure of the conductive assistant is destroyed, and the network in the conductive assistant is disrupted, thereby degrading electrical conductivity. However, there has been no study focusing on the three-dimensional structure of the conductive assistant in the coating agent.

The present invention has been made in view of the aforementioned problem, and an object thereof is to provide coated positive electrode active material particles for a lithium ion battery, with which the electrical conductivity of the coating layer can be improved by optimizing the three-dimensional structure of the conductive assistant in the coating layer to exhibiting the electrical conductivity. Solution to Problem

The present invention relates to coated positive electrode active material particles for a lithium ion battery, the particles including a positive electrode active material particle and a coating layer that contains a polymer compound and a conductive assistant and that covers at least part of a surface of the positive electrode active material particle, in which the coated positive electrode active material particles have a paraffin oil absorption value of 25 to 40 mL/100 g as measured in accordance with JIS K 5101-13-1 (2004).

Advantageous Effects of Invention

The present invention can provide coated positive electrode active material particles for a lithium ion battery, with which the electrical conductivity of the coating layer can be improved by optimizing the three-dimensional structure of the conductive assistant in the coating layer to exhibiting the electrical conductivity.

Description of Embodiments

The present invention will now be described in detail. In this description, the term "lithium ion battery" is a concept that includes lithium ion secondary batteries.

[Coated positive electrode active material particles for lithium ion battery]

Coated positive electrode active material particles for a lithium ion battery according to the present invention include a positive electrode active material particle and a coating layer that contains a polymer compound and a conductive assistant and that covers at least part of a surface of the positive electrode active material particle, in which the coated positive electrode active material particles have a paraffin oil absorption value of 25 to 40 mL/100 g as measured in accordance with JIS K 5101-13-1 (2004).

The coated positive electrode active material particles for a lithium ion battery according to the present invention has a paraffin oil absorption value (hereinafter may simply be referred to as the oil absorption value) of 25 to 40 mL/100 g as measured in accordance with JIS K 5101-13-1 (2004). It is considered that the oil absorption value increases as the conductive assistant assumes a three-dimensional structure in the coating layer. Thus, the coating layer that has an oil absorption value of 25 to 40 mL/100 g is considered to have a three-dimensional structure formed therein by the conductive assistant and thus exhibit excellent conductivity.

It is considered that, at an oil absorption value of less than 25 mL/100 g, the conductive assistant does not form a sufficient three-dimensional structure and thus the coating layer has low electrical conductivity. Meanwhile, it is considered that, at an oil absorption value exceeding 40 mL/100 g, the amount of the conductive assistant in the coating layer is excessively high, and, thus, when a lithium ion battery electrode is formed, the thickness of the electrode increases. This presumably results in the increase in lithium ion diffusion resistance and in the increase in initial internal resistance.

The paraffin oil absorption value as measured in accordance with JIS K 5101-13-1 (2004) refers to a value obtained by changing "refined linseed oil" used in JIS K 5101-13-1 (2004) to "paraffin oil". A paraffin oil having a 15°C specific gravity of 0.835 to 0.855 and a 37.8°C viscosity of 11.70 to 14.40 [$mm^2$/sec] is used as the paraffin oil.

The oil absorption value is preferably 30 to 40 mL/100 g.

The volume-average particle size of the coated positive electrode active material particles for a lithium ion battery according to the present invention is preferably 15 to 20 $\mu$m from the viewpoint of battery electrical characteristics.

The volume-average particle size of the coated positive electrode active material particles for a lithium ion battery according to the present invention refers to the particle diameter (Dv50) at an integrated value of 50% in a particle size distribution determined by a microtrac method (laser diffraction/scattering method). The microtrac method is a method for determining a particle size distribution by utilizing scattered light obtained by irradiating particles with laser light. In measuring the volume-average particle size, a laser diffraction/scattering particle size distribution analyzer (Microtrac produced by MicrotracBEL Corp., etc.) can be used.

In the coated positive electrode active material particles for a lithium ion battery according to the present invention, at least part of a surface of a positive electrode active material particle is covered with a coating layer containing a polymer compound and a conductive assistant.

Examples of the positive electrode active material particle include particles composed of a complex oxide of lithium and a transition metal {a complex oxide of one transition metal ($LiCoO_2$, $LiNiO_2$, $LiAlMnO_4$, $LiMnO_2$, $LiMn_2O_4$, etc.), a complex oxide of two transition metals (for example, $LiFeMnO_4$, $LiNi_{1-x}Co_xO_2$, $LiMn_{1-y}Co_yO_2$, $LiNi_{1/3}Co_{1/3}Al_{1/3}O_2$, and $LiNi_{0.8}Co_{0.15}Al_{0.05}O_2$), or a complex oxide of three or more transition metals [for example, $LiM_aM'_bM''_cO_2$ (M, M', and M" each represent a transition metal element different from one another, and a + b + c = 1 is satisfied, for example, $LiNi_{1/3}Mn_{1/3}Co_{1/3}O_2$)]}, a lithium-containing transition metal phosphate (for example, $LiFePO_4$, $LiCoPO_4$, $LiMnPO_4$, and $LiNiPO_4$), a transition metal oxide (for example, $MnO_2$ and $V_2O_5$), a transition metal sulfide (for example, $MoS_2$ and $TiS_2$), and a conductive polymer (for example, polyaniline, polypyrrole, polythiophene, polyacetylene, poly-p-phenylene, and polyvinylcarbazole), and two or more types of particles may be used in combination.

Here, the lithium-containing transition metal phosphate may have some of transition metal sites substituted with a different transition metal. Among these, particles of lithium manganate ($LiMn_2O_4$) are preferable.

The volume-average particle size of the positive electrode active material particles is preferably 15 to 20 $\mu$m.

The conductive assistant is selected from among conductive materials.

Specific examples of the conductive materials include, but are not limited to, metal [nickel, aluminum, stainless steel (SUS), silver, copper, titanium, etc.], carbon [graphite and carbon black (acetylene black, Ketjen black, furnace black, channel black, thermal lamp black, etc.) etc.], and mixtures thereof.

These conductive assistants may be used alone or in combination. In addition, alloys and metal oxides of these conductive materials may also be used. From the viewpoint of electrical stability, the conductive material is preferably aluminum, stainless steel, carbon, silver, copper, titanium, or a mixture thereof, more preferably silver, aluminum, stainless steel, or carbon, and yet more preferably carbon.

These conductive assistants may be obtained by coating a particle-type ceramic material or a resin material with a conductive material (a metal selected among the aforementioned materials for the conductive assistant) by plating or the like.

Although the average particle size of the conductive assistant is not particularly limited, from the viewpoint of the electrical characteristics of the battery, the average particle size is preferably 0.01 to 10 pm, more preferably 0.02 to 5 pm, and yet more preferably 0.03 to 1 $\mu$m. In this description, the "particle size" refers to a maximum distance L among distances between any two points on the contour of the conductive assistant. The value of the "average particle size" employed is a value calculated as an average value of particle sizes of particles observed in several to several tens of fields-of-view by using observation means such as a scanning electron microscope (SEM) or a transmission electron microscope (TEM).

The shape (form) of the conductive assistant is not limited to a particle form and may be a form other than the particle form, and the conductive assistant may take a form of a filler conductive material, such as carbon nanotubes, that has been put to practice.

The conductive assistant may have a fibrous shape and may be conductive fibers.

Examples of the conductive fibers include carbon fibers such as PAN carbon fibers and pitch carbon fibers, conductive fibers made by evenly dispersing highly conductive metal or graphite in synthetic fibers, metal fibers obtained by forming fibers from metal such as stainless steel, conductive fibers obtained by coating surfaces of organic fibers with metal, and conductive fibers obtained by coating surfaces of organic fibers with a conductive material-containing resin. Among these conductive fibers, carbon fibers are preferable. A propylene resin with graphene kneaded therein is also preferable. When the conductive assistant is conductive fibers, the average fiber diameter thereof is preferably 0.1 to 20 $\mu$m.

The ratio of the weight of the conductive assistant to the weight of the coating layer is preferably 1 to 5 wt%. When the ratio of the weight of the conductive assistant is less than 1 wt%, it may be difficult to form a three-dimensional structure that exhibits electrical conductivity in the coating layer by using the conductive assistant. Meanwhile, when the ratio of the weight of the conductive assistant exceeds 5 wt%, the ratio of the volume of the conductive assistant to the volume of the coated positive electrode active material particles for a lithium ion battery increases, and the energy density is decreased.

The polymer compound that constitutes the coating layer is preferably a polymer obtained by polymerizing a monomer composition that contains an ester compound (a11) between a C1-C12 monohydric aliphatic alcohol and (meth)acrylic acid, and an anionic monomer (a12).

In this description, (meth)acrylic acid means methacrylic acid or acrylic acid.

The acid number (unit: mgKOH/g) of the polymer compound of the present invention is preferably 5 to 200, more preferably 7 to 100, and particularly preferably 10 to 50 from the viewpoint of reducing the initial internal resistance of the lithium ion battery described below.

The acid number can be adjusted as appropriate by the types and weight ratios of the monomers constituting the polymer compound. For example, increasing the weight of the ester compound (a11) among all monomers constituting the polymer compound decreases the acid number.

The acid number is measured by the method described in JIS K 0070-1992.

<Ester compound (all)>

The ester compound (a11) of the present invention is an ester compound formed between a C1-C12 monohydric aliphatic alcohol and (meth)acrylic acid. Examples of the C1-C12 monohydric aliphatic alcohol are C1-C12 monohydric branched or linear aliphatic alcohols such as methanol, ethanol, propanol (n-propanol and iso-propanol), butyl alcohol (n-butyl alcohol, sec-butyl alcohol, and tert-butyl alcohol), pentyl alcohol (n-pentyl alcohol, 2-pentyl alcohol, neopentyl alcohol, etc.), hexyl alcohol (1-hexanol, 2-hexanol, 3-hexanol etc.), heptyl alcohol (n-heptyl alcohol, 1-methylhexyl alcohol, 2-methylhexyl alcohol, etc.), octyl alcohol (n-octyl alcohol, 1-methylheptanol, 1-ethylhexanol, 2-methylheptanol, 2-ethylhexanol, etc.), nonyl alcohol (n-nonyl alcohol, 1-methyloctanol, 1-ethylheptanol, 1-propylhexanol, 2-ethylheptyl alcohol, etc.), decyl alcohol (n-decyl alcohol, 1-methylnonyl alcohol, 2-methylnonyl alcohol, 2-ethyloctyl alcohol, etc.), undecyl alcohol (n-undecyl alcohol, 1-methyldecyl alcohol, 2-methyldecyl alcohol, 2-ethylnonyl alcohol, etc.), and lauryl alcohol (n-lauryl alcohol, 1-methylundecyl alcohol, 2-methylundecyl alcohol, 2-ethyldecyl alcohol, 2-butylhexyl alcohol, etc.)

Of the aforementioned ester compounds (all), methyl (meth)acrylate, propyl (meth)acrylate, butyl (meth)acrylate, 2-methylhexyl (meth)acrylate, 2-ethylhexyl (meth)acrylate, dodecyl (meth)acrylate, and any combination thereof are preferable, 2-ethylhexyl methacrylate and dodecyl methacrylate are more preferable from the viewpoint of cycle properties. Among ester compounds (all), 30 wt% or more (yet more preferably 60 wt% or more) of dodecyl methacrylate is particularly preferable.

<Anionic monomer (a12)>

The anionic monomer (a12) is a monomer that has a radical-polymerizable group and an anionic group. Examples of the preferable radical-polymerizable group include a vinyl group, an allyl group, a styrenyl group, and a (meth)acryloyl group, and examples of the preferable anionic group include a phosphonic acid group, a sulfonic acid group, and a carboxyl group.

The anionic monomer (a12) is preferably at least one selected from the group consisting of C3-C9 radical-polymerizable unsaturated carboxylic acid, C2-C8 radical-polymerizable unsaturated sulfonic acid, and C2-C9 radical-polymerizable unsaturated phosphonic acid.

Examples of C3-C9 radical-polymerizable unsaturated carboxylic acid include C3-C9 radical-polymerizable unsaturated aliphatic monocarboxylic acid and C9 radical-polymerizable unsaturated aromatic monocarboxylic acid. Examples of C3-C9 radical-polymerizable unsaturated aliphatic monocarboxylic acid include (meth)acrylic acid, butanoic acid (including substituted butanoic acid such as 2-methylbutanoic acid and 3-methylbutanoic acid), pentenoic acid (including substituted pentenoic acid such as 2-methylpentenoic acid and 3-methylpentenoic acid), hexenoic acid (including substituted hexenoic acid such as 2-methylhexenoic acid and 3-methylhexenoic acid), heptenoic acid (including substituted heptenoic acid such as 2-methylheptenoic acid and 3-methylheptenoic acid), and octenoic acid (including substituted octenoic acid such as 2-methyloctenoic acid and 3-methyloctenoic acid).

Examples of C9 radical-polymerizable unsaturated aromatic monocarboxylic acid include 3-phenylpropenoic acid and vinyl benzoic acid.

Examples of C2-C8 radical-polymerizable unsaturated sulfonic acid include C2-C8 radical-polymerizable unsaturated aliphatic monosulfonic acid and C8 radical-polymerizable unsaturated aromatic monosulfonic acid.

Examples of C2-C8 radical-polymerizable unsaturated aliphatic monosulfonic acid include vinylsulfonic acid (including substituted vinylsulfonic acid such as 1-methylvinylsulfonic acid and 2-methylvinylsulfonic acid), allylsulfonic acid (including substituted allylsulfonic acid such as 1-methylallylsulfonic acid and 2-methylallylsulfonic acid anion)), butenesulfonic acid (including substituted butenesulfonic acid such as 1-methylbutenesulfonic acid and 2-methylbutenesulfonic acid), pentenesulfonic acid (including substituted pentenesulfonic acid such as 1-methylpentenesulfonic acid and 2-methylpentenesulfonic acid), hexenesulfonic acid (including substituted hexenesulfonic acid such as 1-methylhexenesulfonic acid and 2-methylhexenesulfonic acid), and heptenesulfonic acid (including substituted heptenesulfoinc acid such as 1-methylhexenesulfonic acid and 2-methylheptenesulfonic acid). Examples of C8 radical-polymerizable unsaturated aromatic monosulfonic acid include styrene sulfonic acid.

Examples of the C2-C9 radical-polymerizable unsaturated phosphonic acid include vinylphosphonic acid, allylphosphonic acid, vinylbenzylphosphonic acid, 1- or 2-phenylethenylphosphonic acid, (meth)acrylamidoalkylphosphonic acid, acrylamidoalkyldiphosphonic acid, phosphonomethylated vinylamine, and (meth)acrylphosphonic acid.

These anionic monomers may be used as a mixture.

These anionic monomers (a12) may be used alone or in combination.

From the viewpoint of cycle properties, C3-C9 radical-polymerizable unsaturated carboxylic acid is preferable among the aforementioned anionic monomers (a12), and 50 wt% or more (preferably 70 wt% or more) of (meth)acrylic acid is more preferable among the anionic monomers (a12).

From the viewpoint of adhesion to positive electrode active material particle, etc., the amount of the ester compound (a11) contained in the monomer composition relative to the total weight of the ester compound (a11) and the anionic monomer (a12) is preferably 70 to 99 wt%, more preferably 80 to 98 wt%, and particularly preferably 90 to 97 wt%.

From the viewpoint of ion conductivity, the amount of the anionic monomer (a12) contained in the monomer composition relative to the total weight of the ester compound (a11) and the anionic monomer (a12) is preferably 1 to 30 wt%, more preferably 2 to 20 wt%, and particularly preferably 3 to 10 wt%.

<Salt (a13) of anionic monomer>

The monomer composition may further contain a salt (a13) of an anionic monomer.

A salt (a13) of an anionic monomer is preferably contained to reduce the internal resistance and improve cycle properties.

Examples of the anion of the anionic monomer constituting the salt (a13) of the anionic monomer include the same anions of the anionic monomers as those listed as examples for the anionic monomer (a12) above, and at least one anion selected from the group consisting of vinylsulfonate anion, allylsulfonate anion, styrenesulfonate anion, and (meth)acrylate anion is preferable.

Examples of the cation constituting the salt (a13) of the anionic monomer include monovalent inorganic cations. Alkali metal cations and ammonium ions are preferable, lithium ions, sodium ions, potassium ions, and ammonium ions are more preferable, and lithium ions are yet more preferable.

For the salt (a13) of the anionic monomer, one salt alone or a combination of two or more salts may be used. When the salt (a13) of the anionic monomer has more than one anions, the cation is preferably at least one cation selected from the group consisting of lithium ions, sodium ions, potassium ions, and ammonium ions.

In the polymer compound, from the viewpoint of electrical conductivity and adhesion, when the monomer composition contains a salt (a13) of an anionic monomer, the amount of the salt (a13) of an anionic monomer contained in the monomer composition relative to the total weight of the ester compound (a11) and the anionic monomer (a12) is preferably 0.1 to 10 wt% and more preferably 0.5 to 5 wt%.

The weight-average molecular weight (Mw) of the polymer compound is preferably 20,000 to 300,000 and more preferably 40,000 to 200,000 from the viewpoint of adhesion to the positive electrode active material particle.

The weight-average molecular weight (Mw) and the number-average molecular weight (Mn) are measured by gel permeation chromatography (hereinafter abbreviated as GPC) under the following conditions.

<GPC measurement conditions>

· Instrument: Alliance GPC V2000 (produced by Waters Corporation)
·Solvent: orthodichlorobenzene
·Standard substance: polystyrene
·Sample concentration: 3 mg/ml
·Column stationary phase: PLgel 10 pm, MIXED-B 2 columns connected in series (produced by Polymer Laboratories Ltd.)
· Column temperature: 135°C

The monomer composition may contain, in addition to the ester compound (all), the anionic monomer (a12), and the salt (a13) of an anionic monomer, at least one selected from an active hydrogen-free copolymerizable vinyl monomer (c) [hereinafter referred to as a copolymerizable vinyl monomer (c)] and a crosslinking agent (d).

Examples of the copolymerizable vinyl monomer (c) are (c1) to (c5) below.

(c1) Carvyl (meth)acrylate obtained from (meth)acrylic acid and C13-C20 branched or linear aliphatic monool, C5-C20 alicyclic monool, or C7-C20 aromatic aliphatic monool Examples of the monool include (i) C13-C20 branched or linear aliphatic monool (tridecyl alcohol, tetradecyl alcohol, pentadecyl alcohol, cetyl alcohol, heptadecyl alcohol, stearyl alcohol, isostearyl alcohol, nonadecyl alcohol, arachidyl alcohol, etc.), (ii) C5-C20 alicyclic monool (cyclohexyl alcohol etc.), (iii) C7-C20 aromatic aliphatic monool (benzyl alcohol etc.), and any mixture of two or more of these.

(c2) Poly (n = 2 to 30) oxyalkylene (C2-C4) alkyl (C1-C18) ether (meth)acrylate [ethylene oxide (hereinafter, abbreviated as EO) 10 mol adduct (meth)acrylate of methanol, propylene oxide (hereinafter, abbreviated as PO) 10 mol adduct (meth)acrylate of methanol, etc.]

(c3) Nitrogen-containing vinyl compound

(c3-1) Amide group-containing vinyl compound

(i) C3-C30 (meth)acrylamide compounds, for example, N,N-dialkyl (C1-C6) or diaralkyl (C7-C15) (meth)acrylamide (N,N-dimethylacrylamide, N,N-dibenzylacrylamide, etc.), and diacetone acrylamide
(ii) C4-C20 amide group-containing vinyl compounds other than the aforementioned (meth)acrylamide compounds, for example, N-methyl-N-vinylacetamide and cyclic amide [C6-C13 pyrrolidone compounds (N-vinylpyrrolidone etc.)]

(c3-2) (Meth)acrylate compound

(i) Dialkyl (C1-C4) aminoalkyl (C1-C4) (meth)acrylate [N,N-dimethylaminoethyl (meth)acrylate, N,N-diethylaminoethyl (meth)acrylate, t-butylaminoethyl (meth)acrylate, morpholinoethyl (meth)acrylate, etc.]
(ii) Quaternary ammonium group-containing (meth)acrylate {quaternarized products obtained by quaternarizing tertiary amino group-containing (meth)acrylate [N,N-dimethylaminoethyl (meth)acrylate, N,N-diethylaminoethyl (meth)acrylate, etc.] by using a quaternarizing agent such as alkyl halide}

(c3-3) Heterocycle-containing vinyl compound
C7-C14 pyridine compounds (2- or 4-vinylpyridine etc.), C5-C12 imidazole compounds (N-vinylimidazole etc.), C6-C13 pyrrole compounds (N-vinylpyrole etc.), and C6-C13 pyrrolidone compounds (N-vinyl-2-pyrrolidone etc.)

(c3-4) Nitryl group-containing vinyl compound
C3-C15 nitryl group-containing vinyl compounds [(meth)acrylonitrile, cyanostyrene, cyanoalkyl (C1-C4) acrylate, etc.]

(c3-5) Other vinyl compound
C8-C16 nitro group-containing vinyl compounds (nitrostyrene etc.) etc.

(c4) Vinyl hydrocarbon

(c4-1) Aliphatic vinyl hydrocarbon
C2-C18 or higher olefin (ethylene, propylene, butene, isobutylene, pentene, heptene, diisobutylene, octene, dodecene, octadecene, etc.) and C4-C10 or higher diene (butadiene, isoprene, 1,4-pentadiene, 1,5-hexadiene, 1,7-octadiene, etc.) etc.
(c4-2) Alicyclic vinyl hydrocarbon
C4-C18 or higher cyclic unsaturated compounds {cycloalkene (cyclohexene etc.), (di)cycloalkadiene [(di)cyclopentadiene etc.], and terpene (pinene, limonene, indene, etc.)} etc.
(c4-3) Aromatic vinyl hydrocarbon
C8-C20 or higher aromatic unsaturated compounds and derivatives thereof (styrene, $\alpha$-methylstyrene, vinyltoluene, 2,4-dimethylstyrene, ethylstyrene, isopropylstyrene, butylstyrene, phenylstyrene, cyclohexylstyrene, benzylstyrene, etc.) etc.

(c5) Vinyl ester, vinyl ether, vinyl ketone, and unsaturated dicarboxylic acid diester

(c5-1) Vinyl ester

Aliphatic vinyl ester [alkenyl ester (vinyl acetate, vinyl propionate, vinyl butyrate, diallyl adipate, isopropenyl acetate, vinyl methoxyacetate, etc.) of C4-C15 aliphatic carboxylic acid (mono- or dicarboxylic acid) etc.]
Aromatic vinyl ester [alkenyl ester (vinyl benzoate, diallyl phthalate, methyl-4-vinylbenzoate, etc.) of C9-C20 aromatic carboxylic acid (mono- or dicarboxylic acid) and aromatic ring-containing ester (acetoxystyrene etc.) of aliphatic carboxylic acid, etc.]

(c5-2) Vinyl ether

Aliphatic vinyl ether [C3-C15 vinyl alkyl (C1-C10) ether (vinyl methyl ether, vinyl butyl ether, vinyl 2-ethylhexyl ether, etc.), vinyl alkoxy (C1-C6) alkyl (C1-C4) ether (vinyl-2-methoxyethyl ether, methoxybutadiene, 3,4-dihydro-1,2-pyran, 2-butoxy-2'-vinyloxydiethyl ether, vinyl-2-ethylmercaptoethyl ether, etc.), poly (2-4) (meth)aryloxyalkane (C2-C6) (diaryloxyethane, triaryloxyethane, tetraaryloxybutane, tetrametharyloxyethane, etc.) etc.]
C8-C20 aromatic vinyl ether (vinyl phenyl ether, phenoxystyrene, etc.)
(c5-3) Vinyl ketone

C4-C25 aliphatic vinyl ketone (vinyl methyl ketone, vinyl ethyl ketone, etc.)
C9-C21 aromatic vinyl ketone (vinyl phenyl ketone, etc.)

(c5-4) Unsaturated dicarboxylic acid diester
C4-C34 unsaturated dicarboxylic acid diester [dialkyl fumarate (two alkyl groups are C1-C22 linear, branched, or alicyclic groups) and dialkyl maleate (two alkyl groups are C1-C22 linear, branched, or alicyclic groups)

When the monomer composition contains a copolymerizable vinyl monomer (c), the amount of the copolymerizable vinyl monomer (c) contained relative to the total weight of the ester compound (a11) and the anionic monomer (a12) is preferably 10 to 50 wt%.

<Crosslinking agent (d)>

Examples of the crosslinking agent (d) include a monomer (d2) having two vinyl groups and a monomer (d3) having three or more vinyl groups.
Examples of the monomer (d2) include di(meth)acrylate of C2-C12 diol, specifically, ethylene glycol di(meth)acrylate, 1,4-butanediol di(meth)acrylate, 1,6-hexanediol di(meth)acrylate, and dodecanediol di(meth)acrylate. Examples of the monomer (d3) include trimethylolpropane tri(meth)acrylate and pentaerythritol tetra(meth)acrylate. Among these crosslinking agents (d), (d2) is preferable from the viewpoints of molecular weight control and adhesion.
When the monomer composition contains a crosslinking agent (d), the weight of the crosslinking agent (d) relative to the total weight of all monomers constituting the polymer compound is preferably 0.05 to 2.5 wt% and more preferably 0.1 to 1 wt% from the viewpoints of molecular weight control and adhesion.
The glass transition point of the polymer compound [hereinafter abbreviated as Tg, measurement method: DSC (differential scanning calorimetry)] is preferably 50 to 200°C, more preferably 70 to 180°C, and yet more preferably 80 to 150°C from the viewpoint of heat resistance of the battery, and can be adjusted, as appropriate, by the types and weights of the monomers.

The polymer compound can be obtained by polymerizing the monomer composition, and a known polymerization method (bulk polymerization, solution polymerization, emulsion polymerization, suspension polymerization, etc.) can be employed as the polymerization method.

The polymerization may be conducted by using a known polymerization initiator {azo initiator [2,2'-azobis(2-methylpropionitrile), 2,2'-azobis(2,4-dimethylvaleronitrile), 2,2'-azobis(2-methylbutyronitrile), etc.] peroxide initiator (benzoyl peroxide, di-t-butyl peroxide, lauryl peroxide, etc.) etc.}.

The amount of the polymerization initiator used relative to the total weight of the monomer components contained in the monomer composition is preferably 0.01 to 5 wt% and more preferably 0.05 to 2 wt%.

Examples of the solvent used in the solution polymerization include ester solvents [preferably C2-C8 ester compounds (for example, ethyl acetate and butyl acetate)], alcohols [preferably C1-C8 aliphatic alcohols (for example, methanol, ethanol, isopropanol, and octanol)], C5-C8 linear, branched, or cyclic hydrocarbons (for example, pentane, hexane, heptane, octane, cyclohexane, toluene, and xylene), amide solvents [for example, N,N-dimethylformamide (hereinafter abbreviated as DMF) and dimethylacetamide], ketone solvents [preferably C3-C9 ketone compounds (for example, methyl ethyl ketone)], etc.

The amount of the solvent used relative to the total weight of the monomer components contained in the monomer composition is, for example, 50 to 200 wt%, and is, for example, 30 to 70 wt% in terms of the concentration in the monomer composition.

The system temperature in the polymerization reaction is usually -5 to 150°C and preferably 30 to 120°C, the reaction time is usually 0.1 to 50 hours and preferably 2 to 24 hours, and the end point of the polymerization reaction is usually the point at which the amount of the unreacted monomers relative to the total weight of the monomer components contained in the monomer composition has reached 5 wt% or less and preferably 1 wt% or less. The amount of the unreacted monomers can be confirmed by a known monomer content quantifying method such as gas chromatography.

<Conductive assistant>

The conductive assistant contained in the coating layer is selected from among conductive materials.

Specific examples thereof include, but are not limited to, metal [nickel, aluminum, stainless steel (SUS), silver, copper, titanium, etc.], carbon [graphite and carbon black (acetylene black, Ketjen black, furnace black, channel black, thermal lamp black, etc.) etc.], and mixtures thereof.

These conductive assistants may be used alone or in combination.

In addition, alloys and metal oxides of these may also be used. From the viewpoint of electrical stability, aluminum, stainless steel, carbon, silver, copper, titanium, or a mixture thereof is preferable, silver, aluminum, stainless steel, or carbon is more preferable, and carbon is yet more preferable. These conductive assistants may be obtained by coating a particle-type ceramic material or a resin material with a conductive material (a metal selected among the aforementioned materials for the conductive assistant) by plating or the like.

Although the average particle size of the conductive assistant is not particularly limited, from the viewpoint of the electrical characteristics of the battery, the average particle size is preferably 0.01 to 10 pm, more preferably 0.02 to 5 pm, and yet more preferably 0.03 to 1 $\mu$m.

In this description, the "particle size" of the conductive assistant refers to a maximum distance L among distances between any two points on the contour of the conductive assistant. The value of the "average particle size" of the conductive assistant employed is a value calculated as an average value of particle sizes of particles observed in several to several tens of fields-of-view by using observation means such as a scanning electron microscope (SEM) or a transmission electron microscope (TEM).

The shape (form) of the conductive assistant is not limited to a particle form and may be a form other than the particle form, and the conductive assistant may take a form of a filler conductive resin composition, such as carbon nanotubes, that has been put to practice.

The conductive assistant may have a fibrous shape and may be conductive fibers.

Examples of the conductive fibers include carbon fibers such as polyacrylonitrile (PAN) carbon fibers and pitch carbon fibers, conductive fibers made by evenly dispersing highly conductive metal or graphite in synthetic fibers, metal fibers obtained by forming fibers from a metal such as stainless steel, conductive fibers obtained by coating surfaces of organic fibers with metal, and conductive fibers obtained by coating surfaces of organic fibers with a conductive material-containing resin. Among these conductive fibers, carbon fibers are preferable.

A propylene resin with graphene kneaded therein is also preferable as the conductive fibers.

When the conductive assistant is conductive fibers, the average fiber diameter thereof is preferably 0.1 to 20 $\mu$m.

The coated positive electrode active material particles for a lithium ion battery according to the present invention can be produced by the following production methods, for example.

(1) A polymer compound, a conductive assistant, and positive electrode active material particles are mixed.

(2) A polymer compound and a conductive assistant are mixed to prepare a coating material, and the coating material and positive electrode active material particles are mixed.

(3) A solution containing a polymer compound and a solvent is mixed with positive electrode active material particles, then a conductive assistant is added thereto, and the solvent is distilled away as necessary.

(4) A mixed solution containing a polymer compound, a conductive assistant, and a solvent is mixed with positive electrode active material particles, and then the solvent is distilled away as necessary.

An example of the method employed to adjust the paraffin oil absorption value of the coated positive electrode active material particles for a lithium ion battery to 25 to 40 mL/100 g as measured in accordance with JIS K 5101-13-1 (2004) is, for example, to use an all-purpose mixer High Speed Mixer FS25 [produced by EARTHTECHNICA Co., Ltd.] during stirring of the mixture after addition of the conductive assistant and to set the peripheral velocity of the tip of the agitator blade to be in the range of 5 to 17 m/s.

In preparing a positive electrode from the coated positive electrode active material particles for a lithium ion battery according to the present invention, the coated positive electrode active material particles for a lithium ion battery and a conductive material are dispersed in a dispersing medium (water, an electrolyte solution, or a solvent) such that the concentration thereof relative to the weight of the dispersing medium is 30 to 60 wt% so as to prepare a slurry dispersion, the dispersion is applied to a current collector by a coating device such as a bar coater, and, if water or a solvent is used as the dispersing medium, the applied dispersion is dried, and if an electrolyte solution is used as the dispersing medium, the excess electrolyte solution is absorbed with an absorbent such as a sponge or suctioned through a mesh to remove the dispersing medium. Then the resulting product may be pressed with a press machine as necessary.

If necessary, a known electrode binder [polyvinylidene fluoride (PVdF) etc.] contained in positive electrodes of known lithium ion batteries may be added to the aforementioned dispersion; however, the electrode binder is preferably not added. In a known positive electrode for a lithium ion battery that does not use, as the positive electrode active material particles, the coated positive electrode active material particles, the conductive paths must be maintained by using the electrode binder to fix the positive electrode active material particles in the positive electrode. However, when the coated positive electrode active material particles for a lithium ion battery according to the present invention are used, the conductive paths can be maintained by the function of the coating layer without fixing the positive electrode active material particles in the positive electrode; thus, there is no need to add an electrode binder. By not adding the electrode binder, the positive electrode active material particles remain unfixed in the positive electrode, and thus the ability to moderate the volume changes in positive electrode active material particles is further improved.

Here, the conductive material used in producing the electrode is different from the conductive assistant contained in the coating layer, exists outside the coating layer of the coated positive electrode active material particles, and has a function of improving the electron conductivity from the surfaces of the coated positive electrode active material particles in the positive electrode.

Examples of water used as the dispersing medium include ion exchange water and ultra pure water.

Examples of the electrolyte solution used as the dispersing medium are the same as the examples of the electrolyte solution (described below) used in preparing a lithium ion battery by using a positive electrode that contains coated positive electrode active material particles for a lithium ion battery according to the present invention.

Examples of the solvent used as the dispersing medium are the same as the examples of the nonaqueous solvent constituting the electrolyte solution used in preparing a lithium ion battery by using a positive electrode that contains coated positive electrode active material particles for a lithium ion battery according to the present invention, and other examples include 1-methyl-2-pyrrolidone, dimethylacetamide, and N,N-dimethylaminopropylamine.

Examples of the current collector include metal foils such as copper, aluminum, titanium, stainless steel, and nickel, resin current collectors composed of conductive polymers (disclosed in Japanese Unexamined Patent Application Publication No. 2012-150905 etc.), conductive carbon sheets, and conductive glass sheets.

Examples of the electrode binder include starch, polyvinylidene fluoride, polyvinyl alcohol, carboxymethylcellulose, polyvinylpyrrolidone, tetrafluoroethylene, styrene-butadiene rubber, polyethylene, and polypropylene.

Examples of the conductive material used together with the coated positive electrode active material particles for a lithium ion battery during the production of the electrode are the same as the examples of the conductive assistant contained in the coating layer.

A lithium ion battery that includes a positive electrode that contains coated positive electrode active material particles for a lithium ion battery according to the present invention can be produced by combining the positive electrode with a counter electrode, placing the resulting assembly together with a separator into a cell container, pouring an electrolyte solution, and sealing the cell container, for example.

Alternatively, a battery is obtained by forming a bipolar electrode by forming a positive electrode on one surface of a current collector and a negative electrode on the other surface of the current collector, stacking the bipolar electrode and a separator, placing the resulting stack in a cell container, pouring an electrolyte solution thereinto, and sealing the cell container.

Examples of the separator include known lithium ion battery separators such as microporous membranes of polyethylene and polypropylene films, multilayer films of porous polyethylene films and polypropylene, nonwoven cloth composed of polyester fibers, aramid fibers, glass fibers, etc., and these separators having surfaces coated with ceramic fine particles such as silica, alumina, and titania.

A known electrolyte solution that is used in producing known lithium ion batteries and contains an electrolyte and a nonaqueous solvent can be used as the electrolyte solution to be poured into the cell container.

The electrolyte used can be an electrolyte that is used in known electrolyte solutions, and examples thereof include lithium salts of inorganic acids such as $LiPF_6$, $LiBF_4$, $LiSbF_6$, $LiAsF_6$, and $LiClO_4$, and lithium salts of organic acids such as $LiN(CF_3SO_2)_2$, $LiN(C_2F_5SO_2)_2$, and $LiC(CF_3SO_2)_3$. Among these, $LiPF_6$ is preferable from the viewpoints of battery output and charge/discharge cycle properties.

The nonaqueous solvent used can be a nonaqueous solvent that is used in known electrolyte solutions, and examples thereof include lactone compounds, cyclic or linear carbonates, linear carboxylates, cyclic or linear ethers, phosphates, nitrile compounds, amide compounds, sulfone, sulfolane, and mixtures thereof.

Examples of the lactone compounds include five-membered-ring lactone compounds ($\gamma$-butyrolactone, $\gamma$-valerolactone, etc.) and six-membered-ring lactone compounds ($\delta$-valerolactone etc.) .

Examples of the cyclic carbonates include propylene carbonate, ethylene carbonate, and butylene carbonate. Examples of the linear carbonates include dimethyl carbonate, methyl ethyl carbonate, diethyl carbonate, methyl-n-propyl carbonate, ethyl-n-propyl carbonate, and din-propyl carbonate.

Examples of the linear carboxylates include methyl acetate, ethyl acetate, propyl acetate, and methyl propionate. Examples of the cyclic ethers include tetrahydrofuran, tetrahydropyran, 1,3-dioxolane, and 1,4-dioxane.

Examples of the linear ethers include dimethoxymethane and 1,2-dimethoxyethane.

Examples of the phosphates include trimethyl phosphate, triethyl phosphate, ethyldimethyl phosphate, diethylmethyl phosphate, tripropyl phosphate, tributyl phosphate, tri(trifluoromethyl) phosphate, tri(trichloromethyl) phosphate, tri(trifluoroethyl) phosphate, tri(triperfluoroethyl) phosphate, 2-ethoxy-1,3,2-dioxaphospholan-2-one, 2-trifluoroethoxy-1,3,2-dioxaphospholan-2-one, and 2-methoxyethoxy-1,3,2-dioxaphospholan-2-one.

An example of the nitrile compounds is acetonitrile. An example of the amide compounds is DMF. Examples of the sulfone include dimethyl sulfone and diethyl sulfone.

These nonaqueous solvents may be used alone or in combination.

From the viewpoints of battery output and charge/discharge cycle properties, preferable among the nonaqueous solvents are lactone compounds, cyclic carbonates, linear carbonates, and phosphates, more preferable are lactone compounds, cyclic carbonates, and linear carbonates, and particularly preferable is a mixture of a cyclic carbonate and a linear carbonate. The most preferable is a mixture of ethylene carbonate (EC) and dimethyl carbonate (DMC) or a mixture of ethylene carbonate (EC) and diethyl carbonate (DEC).

EXAMPLES

The present invention will now be described through specific examples; however, the present invention is not limited by these examples without departing from the gist of the present invention. Unless otherwise noted, parts means parts by weight and % means wt%.

<Production Example 1: Production of polymer compound (R-1)>

To a four-necked flask equipped with a stirrer, a thermometer, a reflux condenser, a dropping funnel, and a nitrogen gas inlet tube, 70.0 parts of toluene was charged and heated to 75°C. Next, a monomer composition containing 95.0 parts of dodecyl methacrylate, 4.6 parts of methacrylic acid, 0.4 parts of 1,6-hexanediol dimethacrylate, and 20 parts of DMF and an initiator solution prepared by dissolving 0.8 parts of 2,2'-azobis(2-methylbutyronitrile) in 10.0 parts of DMF were continuously added dropwise into the four-necked flask over a period of 2 hours with the dropping funnel while stirring and blowing nitrogen therein to carry out radical polymerization. Upon completion of the dropwise addition, the reaction was continued at 75°C for 3 hours. Next, the temperature was elevated to 80°C, and the reaction was continued for 3 hours to thereby obtain a copolymer solution having a resin concentration of 50%. The obtained copolymer solution was placed in a Teflon (registered trademark) vat and was vacuum dried at 120°C at 0.01 MPa for 3 hours to distill away toluene and obtain a copolymer. This copolymer was roughly crushed with a hammer and further crushed in a mortar to thereby obtain a polymer compound (R-1).

The acid number of (R-1) was 30 mgKOH/g, the weight-average molecular weight (Mw) was 90,000.

<Acid number measurement conditions>

· Instrument: Automatic Titrator COM-1700 (produced by HIRANUMA Co., Ltd.)
Measurement was conducted with Automatic Titrator [COM-1700 (produced by HIRANUMA Co., Ltd.)] by potentiometric titration in accordance with the JIS K 0070-1922.

<GPC measurement conditions>

· Instrument: Alliance GPC V2000 (produced by Waters Corporation)
·Solvent: orthodichlorobenzene, DMF, THF (tetrahydrofuran)
·Standard substance: polystyrene
·Sample concentration: 3 mg/ml
·Column stationary phase: PLgel 10 pm, MIXED-B 2 columns connected in series (produced by Polymer Laboratories Ltd.)
· Column temperature: 135°C

<Example 1: Production of coated positive electrode active material particles (P-1)>

Into an all-purpose mixer High Speed Mixer FS25 [produced by EARTHTECHNICA Co., Ltd.], 100 parts of $LiMn_2O_4$ particles (volume-average particle size = 16 $\mu$m) serving as positive electrode active material particles were placed. While stirring the particles at room temperature with an agitator blade at a tip peripheral velocity of 5 m/s (hereinafter may be simply referred to as the peripheral velocity), 17 parts of a 25 wt% DMF solution of the polymer compound (R-1) obtained in Production Example 1 was added dropwise over a period of 2 minutes, and the resulting mixture was stirred for 5 minutes. Next, while stirring, 1 part of Ketjen black [EC300J produced by Lion Specialty Chemicals Co., Ltd., primary particle size: 39.5 nm] serving as a conductive assistant was added in fractions over a period of 2 minutes, followed by stirring for 30 minutes. Subsequently, while still continuing the stirring, the pressure was decreased to 0.01 MPa. Under stirring at the reduced pressure, the temperature was elevated to 140°C, and the stirring, reduced pressure, and temperature were maintained for 8 hours to distill away the volatile components. The obtained powder was classified through a screen having 106 $\mu$m openings to thereby obtain coated positive electrode active material particles (P-1) having a volume-average particle size of 16 $\mu$m.
All of the stirring operations described above were carried out such that the peripheral velocity of the tip of the agitator blade was 5 m/s.

(Measurement of oil absorption value)

The oil absorption value of the coated positive electrode active material particles (P-1) was measured in accordance with JIS K 5101-13-1 except that the refined linseed oil was changed to paraffin oil. The results are shown in Table 1.

(Measurement of powder resistance)

The powder resistance of the coated positive electrode active material particles (P-1) under a 20 kN load was measured with a powder resistance measurement system MCP-PD51 [produced by Mitsubishi Chemical Analytech Co., Ltd.]. The results are shown in Table 1.

(Preparation of lithium ion battery for evaluation)

In a planetary agitator-type mixing and kneading apparatus {Awatori Rentaro [produced by THINKY CORPORATION]}, 42 parts of an electrolyte solution prepared by dissolving 1 mol/L of $LiPF_6$ in an ethylene carbonate (EC)/diethyl carbonate (DEC) mixed solvent (1:1 volume ratio) and 4.2 parts of carbon fibers [DONACARBO Milled S-243 produced by Osaka Gas Chemicals Co., Ltd., average fiber length: 500 pm, average fiber diameter: 13 pm, electrical conductivity: 200 mS/cm] were mixed at 2000 rpm for 7 minutes. Then, 30 parts of the aforementioned electrolyte solution and 206 parts of coated positive electrode active material particles (P-1) for a lithium ion battery prepared in Example 1 were added thereto, the resulting mixture was mixed in "Awatori Rentaro" at 2000 rpm for 1.5 minutes, 20 parts of the electrolyte solution was further added thereto, the resulting mixture was stirred in "Awatori Rentaro" at 2000 rpm for 1 minute, 2.3 parts of the electrolyte solution was further added thereto, and the resulting mixture was stirred in "Awatori Rentaro" at 2000 rpm for 1.5 minutes so as to prepare a positive electrode active material slurry.

The obtained positive electrode active material slurry was applied to one surface of a 50 pm-thick carbon-coated aluminum foil and pressed at a pressure of 10 MPa for about 10 seconds to prepare a lithium ion battery positive electrode (3 cm × 3 cm) for evaluation about 400 $\mu$m thick. A carbon-coated aluminum foil (3 cm × 3 cm) having a terminal (5 mm × 3 cm) attached thereto, one separator (Celgard 2500 composed of PP) (5 cm × 5 cm), and a copper foil (3 cm × 3 cm) having a terminal (5 mm × 3 cm) attached thereto were stacked so that the two terminals came out in the same direction, the resulting stack was sandwiched between two commercially available fusion-bonding aluminum laminate films (8 cm × 8 cm), and one side where the terminals were exposed was fusion-bonded to prepare a laminate cell for positive electrode evaluation.

Next, the obtained lithium ion battery positive electrode (3 cm × 3 cm) for evaluation was inserted between a carbon-coated aluminum foil and a separator such that the carbon-coated aluminum foil of the laminate cell contacted the carbon-coated aluminum foil of the lithium ion battery positive electrode, and then 70 $\mu$L of an electrolyte solution was poured over the electrode to allow the electrode to absorb the electrolyte solution. The electrolyte solution (70 $\mu$L) was also poured over the separator.

Next, a lithium foil was inserted between the separator and the copper foil, and two sides orthogonal to the previously fusion-bonded side were heat-sealed.

Subsequently, additional 70 $\mu$L of the electrolyte solution was poured through the opening, and the opening was heat-sealed while vacuuming the inside of the cell with a vacuum sealer so as to seal the laminate cell and obtain a lithium ion battery 1 for evaluation.

<Measurement of initial internal resistance>

The lithium ion battery 1 for evaluation was evaluated by the following method at 45°C using a charge/discharge meter "HJ-SD8" [produced by HOKUTO DENKO CORPORATION].

The battery was discharged at a current of 0.1 C to 10 mV by a constant current, constant voltage charging method (also referred to as the CCCV mode), stopped for 10 minutes, and then charged at a current of 1.0 C to 1.5 V. The voltage and current were measured 0 seconds after the 1.0 C charging, the voltage and current were measured 10 seconds after the charging, and the initial internal resistance was calculated from the following equation. A low initial internal resistance means that electrical characteristics are excellent.

The voltage 0 seconds after charging is the voltage (also referred to as the voltage at charging) measured at the same as the completion of charging.

$$[\text{Internal resistance } (\Omega)] = [(\text{voltage 0 seconds after charging at 1.0 C}) - (\text{voltage 10 seconds after charging at 1.0 C})]/[(\text{current 0 seconds after charging at 1.0 C}) - (\text{current 10 seconds after charging at 1.0 C})]$$

The results are shown in Table 1.

<Examples 2 to 5 and Comparative Example 1>

Coated positive electrode active material particles (P-2) to (P-5) and (P'-1) and lithium ion batteries 2-5 and 1' for evaluation were prepared as in Example 1 except that the mixing condition (peripheral velocity) during preparation of the coated positive electrode active material particles was changed as indicated in Table 1, and the oil absorption value, powder resistance, and initial internal resistance were measured. The results are shown in Table 1.

<Example 6 and Comparative Example 2>

Coated positive electrode active material particles (P-6) and (P'-2) and lithium ion batteries 6 and 2' for evaluation were prepared as in Example 1 except that the amount of the conductive assistant added during preparation of the coated positive electrode active material particles was changed as indicated in Table 1, and the oil absorption value, powder resistance, and initial internal resistance were measured. The results are shown in Table 1.

[Table 1]

| | Coated positive electrod e active material particles | Positive electrod e active material | Polymer compoun d | Conductiv e assistant | Stirring conditions | Evaluation | | |
|---|---|---|---|---|---|---|---|---|
| | | Amount added [parts] | Amount added [parts] | Amount added [parts] | Periphera l velocity [m/s] | Oil absorptio n value [mL/ 100g] | Powder resistanc e [$\Omega \cdot$cm] | Initial internal resistanc e [$\Omega \cdot$cm$^2$] |
| Example 1 | P-1 | 100 | 4.25 | 1 | 5 | 33 | 15.8 | 18.6 |
| Example 2 | P-2 | 100 | 4.25 | 1 | 7 | 33 | 30.1 | 20.1 |
| Example 3 | P-3 | 100 | 4.25 | 1 | 9 | 32 | 53.9 | 21.2 |
| Example 4 | P-4 | 100 | 4.25 | 1 | 15 | 31 | 64.9 | 23.1 |
| Example 5 | P-5 | 100 | 4.25 | 1 | 17 | 25 | 152.1 | 29.5 |
| Example 6 | P-6 | 100 | 4.25 | 5 | 5 | 40 | 14.7 | 19.4 |
| Comparativ e Example 1 | P'-1 | 100 | 4.25 | 1 | 18 | 24 | 296.4 | 40.2 |
| Comparativ e Example 2 | P'-2 | 100 | 4.25 | 10 | 5 | 41 | 8.5 | 35.1 |

The results in Table 1 show that a lithium ion battery with a low initial internal resistance can be produced by using coated positive electrode active material particles for a lithium ion battery according to the present invention.

Industrial Applicability

The coated positive electrode active material particles for a lithium ion battery according to the present invention are particularly useful as the positive electrode active material particles for bipolar secondary batteries and lithium ion secondary batteries that are used in cellular phones, personal computers, hybrid vehicles, electric vehicles, etc.

**Claims**

1. Coated positive electrode active material particles for a lithium ion battery, the particles comprising a positive electrode active material particle and a coating layer that contains a polymer compound and a conductive assistant and that covers at least part of a surface of the positive electrode active material particle,
wherein the coated positive electrode active material particles have a paraffin oil absorption value of 25 to 40 mL/100 g as measured in accordance with JIS K 5101-13-1 (2004).

2. The coated positive electrode active material particles for a lithium ion battery according to Claim 1, wherein the coated positive electrode active material particles have a volume-average particle size of 15 to 20 $\mu$m.

3. The coated positive electrode active material particles for a lithium ion battery according to Claim 1 or 2, wherein the positive electrode active material particle is a particle containing lithium manganate.

4. The coated positive electrode active material particles for a lithium ion battery according to any one of Claims 1 to 3, wherein a ratio of the conductive assistant to a weight of the coating layer is 1 to 5 wt%.

## INTERNATIONAL SEARCH REPORT

| International application No. |
| --- |
| **PCT/JP2021/031809** |

### A. CLASSIFICATION OF SUBJECT MATTER

*H01M 4/505*(2010.01)i; *C01G 45/00*(2006.01)i; *H01M 4/36*(2006.01)i
FI:   H01M4/505; H01M4/36 C; C01G45/00

According to International Patent Classification (IPC) or to both national classification and IPC

### B. FIELDS SEARCHED

Minimum documentation searched (classification system followed by classification symbols)

H01M4/505; C01G45/00; H01M4/36

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2020-47549 A (SANYO CHEMICAL IND LTD) 26 March 2020 (2020-03-26) | 1-4 |
| A | JP 2016-154100 A (TOYOTA MOTOR CORP) 25 August 2016 (2016-08-25) | 1-4 |
| A | US 2017/0170481 A1 (LG CHEM, LTD.) 15 June 2017 (2017-06-15) | 1-4 |
| A | JP 2019-207791 A (TOYOTA MOTOR CORP) 05 December 2019 (2019-12-05) | 1-4 |
| A | JP 2008-34378 A (KAO CORP) 14 February 2008 (2008-02-14) | 1-4 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 November 2021** | **16 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/031809**

| Patent document cited in search report | | | Publication date (day/month/year) | Patent family member(s) | | | Publication date (day/month/year) |
|---|---|---|---|---|---|---|---|
| JP | 2020-47549 | A | 26 March 2020 | (Family: none) | | | |
| JP | 2016-154100 | A | 25 August 2016 | US | 2016/0248085 | A1 | |
| | | | | CN | 105914346 | A | |
| | | | | KR | 10-2016-0102340 | A | |
| | | | | KR | 10-2017-0121093 | A | |
| US | 2017/0170481 | A1 | 15 June 2017 | WO | 2016/032223 | A1 | |
| | | | | EP | 3188290 | A1 | |
| | | | | KR | 10-2016-0024776 | A | |
| | | | | CN | 106663799 | A | |
| JP | 2019-207791 | A | 05 December 2019 | US | 2019/0372090 | A1 | |
| | | | | CN | 110544764 | A | |
| JP | 2008-34378 | A | 14 February 2008 | US | 2010/0230641 | A1 | |
| | | | | WO | 2008/001792 | A1 | |
| | | | | EP | 2034541 | A1 | |
| | | | | CN | 101479866 | A | |
| | | | | KR | 10-2009-0016734 | A | |

Form PCT/ISA/210 (patent family annex) (January 2015)

**EP 4 207 382 A1**

REFERENCES CITED IN THE DESCRIPTION

**Patent documents cited in the description**

- JP 2016189325 A
- JP 2012150905 A